# EUROPÄISCHE PATENTSCHRIFT

(11) **EP 1 175 297 B1**
(45) Veröffentlichungstag und Bekanntmachung des Hinweises auf die Patenterteilung: **02.01.2003**
(21) Anmeldenummer: 00920581.6
(22) Anmeldetag: 25.03.2000
(51) Int. Cl.: B29D 11/00, G02B 6/16, G02B 6/18, B29C 71/04

(54) **VERFAHREN ZUR HERSTELLUNG VON ROHLINGEN FÜR POLYMERE OPTISCHE FASERN**
METHOD FOR PRODUCING BLANKS FOR POLYMERIC OPTICAL FIBRES
PROCEDE POUR PRODUIRE DES EBAUCHES DESTINEES A DES FIBRES OPTIQUES POLYMERES

(30) Priorität: 01.04.1999 DE 19914958
(43) Veröffentlichungstag der Anmeldung: 30.01.2002
(73) Patentinhaber: Deutsche Telekom AG, 53113 Bonn (DE)
(72) Erfinder: HEITMANN, Walter, D-64401 Gross-Bieberau (DE)
(86) Internationale Anmeldenummer: EP0002653
(87) Internationale Veröffentlichungsnummer: WO00059712

(56) Entgegenhaltungen:
- WO-A-98/10916
- DE-A- 3 730 198

## Beschreibung

Die Erfindung betrifft ein Verfahren zur Herstellung von Rohlingen für polymere optische Fasern mit über dem Radius veränderlichem Brechungsindex, wobei ein Kern aus Rohlingsmaterial zur Bildung des Rohlings bis zum Erreichen eines vorgebbaren Durchmessers mit Beschichtungsmaterial beschichtet wird und wobei der Brechungsindex des aufzutragenden Beschichtungsmaterials sukzessive entsprechend einem vorgebbaren Verlauf entlang des Radius des entstehenden Rohlings verändert wird.

Polymere optische Fasern (POF, auch Kunststoffasern oder Plastikfasern genannt) sind Lichtwellenleiter, die in zunehmendem Maße zur Nachrichten- und Datenübertragung eingesetzt werden.

Beim Aufbau von breitbandigen Nachrichtennetzen entfällt der weitaus größte Teil der benötigten Datenleitungen auf die Anschlußverzweigungen zwischen den Hauptadern des Netzes und den Endkunden. Es ist daher wirtschaftlich bedeutsam, wenn die Kosten der Anschlußverzweigungen der Netze reduziert werden können.

Bisher werden für die Anschlußverzweigungen moderner Glasfasernetze noch überwiegend Metall- oder Glasfaserkabel eingesetzt.

Da die Anschlußverzweigungen zumeist recht kurz ausfallen, genügte es aber, wenn dort Kunststoffasern zum Einsatz kommen, die zwar eine höhere Dämpfung aufweisen, als Glasfasern, die jedoch sehr viel einfacher zu verarbeiten sind. Ferner lassen sich die benötigten Kunststoffe in nahezu beliebiger Menge zu geringen Kosten herstellen, was auch ein Vorteil gegenüber Metallkabeln ist. Ferner sind sie unempfindlich gegen induzierte Störspannungen und besitzen eine hohe Übertragungskapazität.

Derzeit stehen praktisch nur sogenannte Stufenindex-POF zur Verfügung; das sind Lichtwellenleiter mit einem Kern aus einem Kunststoff mit höherer Brechzahl und einem Kunststoffmantel mit geringerer Brechzahl. Dieser Fasertyp weist eine typische Übertragungsbandbreite von 100 Mb/s bei einer Länge von 100 m auf. Dieser Wert reicht für Breitbandnetze nicht aus. Dort sind Übertragungsraten im Gb/s-Bereich erforderlich.

Derart hohe Übertragungsbandbreiten könnten mit Gradientenindex-POF (GI-POF) erreicht werden. Das sind Fasern, deren Brechungsindex im Kern von der Achse zum Rand hin etwa parabelförmig stetig abnimmt. Bisher ist jedoch kein wirtschaftlicher Herstellungsprozeß für GI-POF bekannt. Das Hauptproblem liegt dabei in der Produktion von ausreichend großen Rohlingen für die Faserherstellung.

Aus EP 0 662 620 A1 ist ein Verfahren zur Herstellung von Rohlingen für polymere optische Fasern bekannt, bei dem Material mit sich änderndem Brechungsindex aufgetragen wird. In DE 37 30 198 A1 wird ein Verfahren zur Herstellung eines länglichen transparenten Körpers aus Kunststoff beschrieben, bei dem mittels einer Auftragsvorrichtung auf eine Oberfläche eines rotierenden zylindrischen Trägerkörpers kontinuierlich über dessen gesamte Länge Schichten eines sich in seiner chemischen Zusammensetzung in zeitlich vorgegebener Weise verändernden flüssigen Gemisches aus wenigstens zwei Kunststoffen aufgetragen und anschließend die aufgetragene Kunststoff-Schichten verfestigt werden. Mit diesem Verfahren ist es jedoch schwierig, gleichmäßig dicke Schichten aufzutragen. Außerdem kann mit diesem Verfahren nur sehr langsam gearbeitet werden.

Aufgabe der vorliegenden Erfindung ist es, ein Verfahren anzugeben, welches die wirtschaftliche Produktion von Rohlingen mit einem einstellbaren Brechungsindexprofil erlaubt.

Diese Aufgabe wird dadurch gelöst, dass wenigstens eine Folie aus dem Beschichtungsmaterial bis zum Erreichen eines vorgebbaren Durchmessers auf den Kern unter ständigem Verschweißen mit dem Kernmaterial aufgewickelt wird, wobei der Brechungsindex der Folie mit der Länge verändert wird.

Vorzugsweise ist dabei vorgesehen, daß die Folie mittels einer längs des Kerns angeordneten Vorrichtung angeschweißt wird, welche eine derartige Strahlung aussendet, die durch die aufgewickelte Folie unter Erwärmung absorbiert wird und dadurch zum Erweichen und Verschweißen der Folie führt.

Durch Wechsel zwischen Folien verschiedener Brechungsindizes, durch Vorbehandeln der aufzuwickelnden Folien, beispielsweise durch Bestrahlung oder durch Versetzen mit Dotierstoffen, kann der Brechungsindex während des Aufwickelns exakt eingestellt werden. Auf diese Weise lassen sich auf wirtschaftliche Weise nahezu beliebig dicke Rohlinge herstellen, deren Brechungsindexprofil exakt eingestellt ist. Die durch die Dicke der verwendeten Folie bedingte leichte Stufigkeit des Brechungsindexprofils des Rohlings wird beim

Herstellen der Faser aus dem Rohling durch Skalierungseffekte und durch Diffusion von Dotierstoffen geglättet, so daß die Faser ein nahezu stetiges Profil des Brechungsindex über dem Radius aufweist.

Behandlungsmethoden der Folie und weitere vorteilhafte Ausführungen der Erfindung sind in weiteren Unteransprüchen näher beschrieben.

Ausführungsbeispiele der Erfindung sind in der Zeichnung anhand mehrerer Figuren dargestellt und in der nachfolgenden Beschreibung näher erläutert. Es zeigt:
- Fig. 1: die schematische Darstellung einer Vorrichtung zur Durchführung des erfindungsgemäßen Verfahrens und
- Fig. 2: die schematische Darstellung einer anderen Vorrichtung zur Durchführung des erfindungsgemäßen Verfahrens.

Gleiche Teile sind in den Figuren mit gleichen Bezugszeichen versehen.

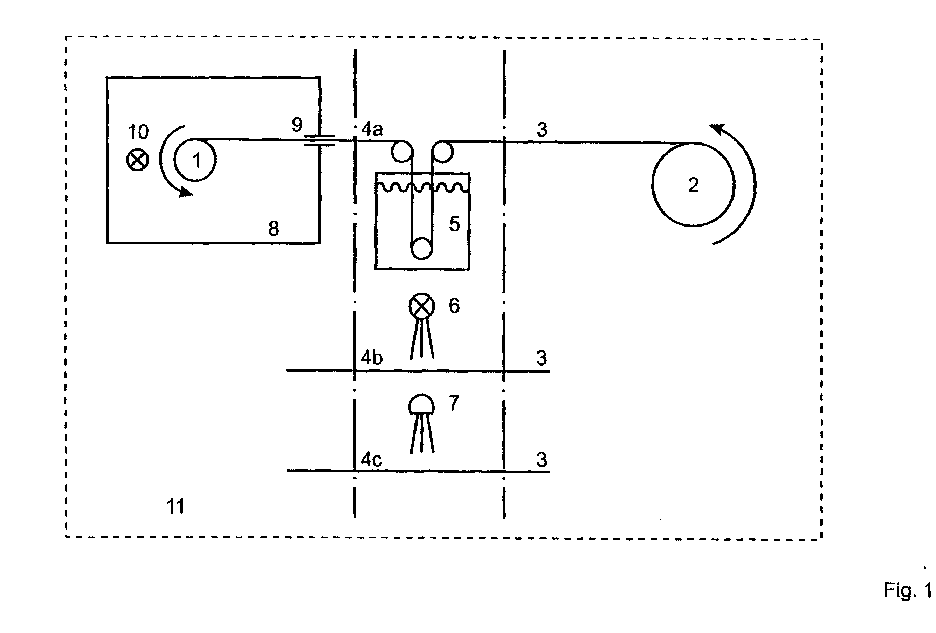

Als Kern des Rohlings wird ein zylindrischer Stab 1 mit einem typischen Durchmesser von 1 mm bis 10 mm und einer Länge von beispielsweise 1 m aus einem Kunststoff mit dem erforderlichen Brechungsindex, beispielsweise Acrylglas, verwendet. Auf diesen Stab wird eine auf einer Trommel 2 befindliche Kunststoffolie 3 gewickelt, deren Dicke etwa 1 µm bis 1000 µm beträgt. Eine schematische Darstellung zeigt die Fig. 1. Dabei ist der zu bewickelnde Stab 1 waagerecht angeordnet. Um Durchbiegungen bei der Bewicklung zu vermeiden, kann der Stab 1 auch entweder senkrecht angeordnet werden oder unter Zugspannung gesetzt werden.

Die Reduzierung des anfänglich vorhandenen Brechungsindex der Folie 3, der mit dem des Stabmaterials identisch ist, erfolgt durch verschiedene Verfahrensschritte, die einzeln oder kombiniert eingesetzt werden können, und zwar dadurch, daß die Folie 3 ein oder mehrere Diffusionsbäder 5 durchläuft (veränderte Folie 4a), durch UV-, IR-, Gamma-, Ionen- oder Elektronen-Bestrahlung 6 der Folie 3 (veränderte Folie 4b) oder durch Besprühen 7 mit Dotierstoffen oder Kunststoffen, die allein oder durch anschließende Bestrahlung den Brechungsindex der Folie 3 verringern (veränderte Folie 4c).

Die behandelte Folie wird unter ständigem Verschweißen auf den rotierenden Kern 1 aufgewickelt. Zwar ergeben sich dabei von Schicht zu Schicht durch die Foliendicke kleine Stufen im Brechungsindex, also praktisch ein Treppenprofil. Die Stufen können aber so fein sein, daß bei der anschließend aus dem Rohling gezogenen Faser, bei der die Höhe der Stufen um den Quotienten aus Rohlingdurchmesser und Faserdurchmesser reduziert ist, ein quasikontinuierliches Brechungsindexprofil vorliegt. Eine zusätzliche Glättung des Profils kann durch Tempern des Rohlings erreicht werden, wobei die Stufen durch Diffusionseffekte ausgeglichen werden.

Zur Herstellung von POF ist extrem reines Rohlingmaterial erforderlich. Daher sollte die Rohlingherstellung unter Reinraumbedingungen erfolgen. Außerdem muß der Rohling frei von Gaseinschlüssen sein, um Blasenbildung zu vermeiden. Das wird im Beispiel dadurch erreicht, daß der Aufwickelbereich 8 evakuiert wird und die Folie 3 aus der unter Normalbedingungen stehenden Umgebung 11 über eine Vakuumschleuse 9 zugeführt wird oder dadurch, daß der Aufwickelbereich 8 unter einer Heliumatmosphäre steht, weil beim Aufwickeln eingeschlossenes Helium aus dem Material in kurzer Zeit ausdiffundiert.

Zum Verschweißen der Folie 3 mit dem Kern 1 wird parallel zum Kern 1 eine Strahlungsquelle 10 angeordnet, deren spektrale Energieverteilung so gewählt wird, daß die Strahlung innerhalb einer dünnen Schicht - beispielsweise der Foliendicke - absorbiert wird und den Kunststoff erweicht, so daß die Grenzflächen miteinander verschmelzen.

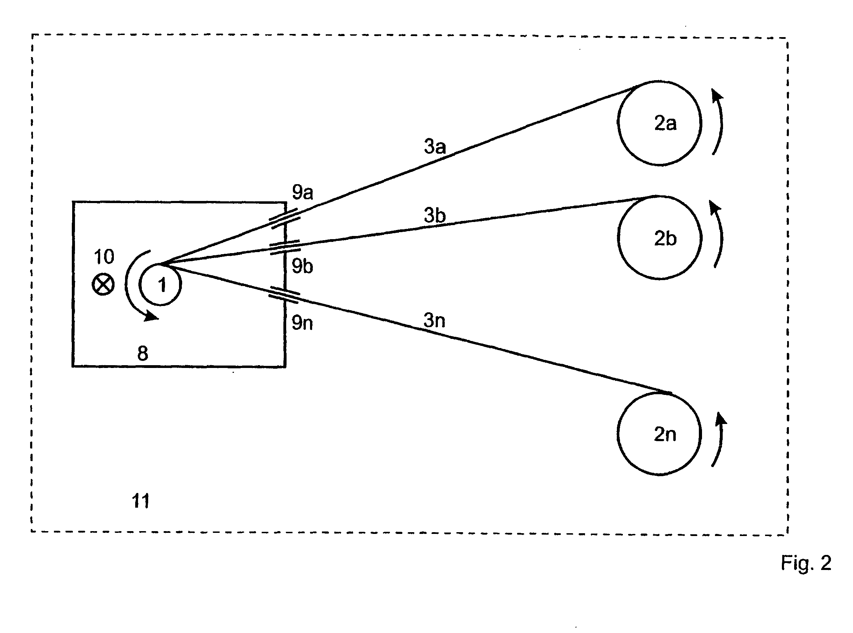

Eine weitere Möglichkeit besteht im gleichzeitigen Bewickeln des zentralen Stabes mit zwei oder mehreren von Trommeln 2a-2n abgewickelten Kunststoffolien 3a bis 3n, wie in Fig. 2 dargestellt, wobei der Brechungsindex von wenigstens einer dieser Folien 3a bis 3n nach den gleichen Verfahren, wie für die Einzelfolie 3 beschrieben, modifiziert wird. Es können aber auch Folien 3a bis 3n mit unterschiedlichen Brechungsindizes verwendet werden, wobei die Dicke einzelner Folien stetig ab- oder zunimmt, und dadurch ein Brechungsindexgradient des Folienpakets erreicht wird. Jede Folie 3a-3n wird im Beispiel über eine separate Schleuse 9a-9n dem Aufwickelbereich 8 zugeführt.

## Patentansprüche

1. Verfahren zur Herstellung von Rohlingen für polymere optische Fasern mit über dem Radius veränderlichem Brechungsindex, wobei ein Kern (1) aus Rohlingsmaterial zur Bildung des Rohlings bis zum Erreichen eines vorgebbaren Durchmessers mit Beschichtungsmaterial beschichtet wird und wobei der Brechungsindex des aufzutragenden Beschichtungsmaterials sukzessive entsprechend einem vorgebbaren Verlauf entlang des Radius des entstehenden Rohlings verändert wird, **dadurch gekennzeichnet, daß** wenigstens eine Folie (3, 3a bis 3n) aus dem Beschichtungsmaterial bis zum Erreichen eines vorgebbaren Durchmessers auf den Kern (1) unter ständigem Verschweißen mit dem Kernmaterial aufgewickelt wird, wobei der Brechungsindex der Folie (3, 3a bis 3n) mit der Länge verändert wird.

2. Verfahren nach Anspruch 1, **dadurch gekennzeichnet, daß** die Folie mittels einer längs des Kerns (1) angeordneten Vorrichtung angeschweißt wird, welche eine derartige Strahlung aussendet, die durch die aufgewickelte Folie (3, 3a bis 3n) unter Erwärmung absorbiert wird und dadurch zum Erweichen und Verschweißen der Folie (3, 3a bis 3n) führt.

3. Verfahren nach einem der Ansprüche 1 oder 2, **dadurch gekennzeichnet, daß** zur Änderung des Brechungsindex zwischen Folien (3) unterschiedlicher Brechungsindizes gewechselt wird.

4. Verfahren nach einem der vorhergehenden Ansprüche, **dadurch gekennzeichnet, daß** zur Erreichung eines veränderlichen Brechungsindex mehrere Folien (3a bis 3n) unterschiedlicher Brechungsindizes übereinandergewickelt werden, wobei der Brechungsindex wenigstens einer der Folien über deren Länge veränderlich ist.

5. Verfahren nach einem der vorhergehenden Ansprüche, **dadurch gekennzeichnet, daß** mehrere Folien (3a bis 3n) unterschiedlicher Brechungsindizes übereinandergewickelt werden, wobei das Dickenverhältnis der Folien (3a bis 3n) untereinander über deren Länge zur Erreichung eines veränderlichen gesamten Brechungsindex der Folien (3a bis 3n) veränderlich ist.

6. Verfahren nach Anspruch 5, **dadurch gekennzeichnet, daß** wenigstens eine Folie (3) zur Veränderung ihrer Dicke vor dem Aufwickeln durch Veränderung ihrer Anliefergeschwindigkeit ausgezogen wird.

7. Verfahren nach einem der vorhergehenden Ansprüche, **dadurch gekennzeichnet, daß** der Brechungsindex wenigstens einer Folie (3) durch Bestrahlung (7) mit elektromagnetischer Strahlung während des Aufwickelns verändert wird.

8. Verfahren nach einem der vorhergehenden Ansprüche, **dadurch gekennzeichnet, daß** der Brechungsindex wenigstens einer Folie (3) durch Bestrahlung (6) mit Korpuskeln während des Aufwickelns verändert wird.

9. Verfahren nach einem der vorhergehenden Ansprüche, **dadurch gekennzeichnet, daß** der Brechungsindex wenigstens einer Folie (3) durch Versetzen (7) mit Dotierstoffen während des Aufwickeins verändert wird.

10. Verfahren nach einem der vorhergehenden Ansprüche, **dadurch gekennzeichnet, daß** der Brechungsindex wenigstens einer Folie (3) durch Beschichten mit einem Material mit anderem Brechungsindex verändert wird.

11. Verfahren nach einem der Ansprüche 9 oder 10, **dadurch gekennzeichnet, daß** die den Brechungsindex der Folie (3) verändernden Stoffe aufgesprüht werden.

12. Verfahren nach einem der vorhergehenden Ansprüche, **dadurch gekennzeichnet, daß** der Brechungsindex wenigstens einer Folie durch Eintauchen der Folie in den Brechungsindex verändernde Bäder vor dem Aufwickeln verändert wird.

13. Verfahren nach Anspruch 12, **dadurch gekennzeichnet, daß** die Folie (3) in derartige Bäder (5) eingetaucht wird, welche eine Diffusion der den Brechungsindex verändernden Stoffe zwischen Folie und Badflüssigkeit bewirken.

14. Verfahren nach einem der vorhergehenden Ansprüche, **dadurch gekennzeichnet, daß** das Aufwickeln im Vakuum (8, 9) geschieht.

15. Verfahren nach einem der Ansprüche 1 bis 13, **dadurch gekennzeichnet, daß** das Aufwickeln in Heliumatmosphäre (8, 9) geschieht.

16. Verfahren nach einem der vorhergehenden Ansprüche, **dadurch gekennzeichnet, daß** der Kern (1) eine Dicke in der Größenordnung von 10 mm aufweist.

17. Verfahren nach einem der vorhergehenden Ansprüche, **dadurch gekennzeichnet, daß** die Größenordnung der Dicke der aufzuwickelnden Folie (3, 3a bis 3n) in einem Bereich von 1 µm bis 1000 µm liegt.

18. Verfahren nach einem der vorhergehenden Ansprüche, **dadurch gekennzeichnet, daß** der Kern (1) zur Vermeidung von übermäßiger Durchbiegung beim Beschichten mechanisch gespannt ist.

19. Verfahren nach einem der vorhergehenden Ansprüche, **dadurch gekennzeichnet, daß** der Kern (1) zur Vermeidung von Durchbiegung beim Beschichten vertikal gehalten wird.

20. Verfahren nach einem der vorhergehenden Ansprüche, **dadurch gekennzeichnet, daß** sowohl das Kernmaterial als auch das Beschichtungsmaterial Acrylglas ist.

21. Verfahren nach einem der vorhergehenden Ansprüche, **dadurch gekennzeichnet, daß** sowohl das Kernmaterial als auch das Beschichtungsmaterial ein PTFE-ähnlicher Kunststoff ist.

22. Verfahren nach einem der vorhergehenden Ansprüche, **dadurch gekennzeichnet, daß** das Brechungsindexprofil des Rohlings durch Tempern geglättet wird.

## Claims

1. Process for the production of blanks for polymeric optical fibres with a refractive index variable over the radius, wherein, to form the blank, a core (1) of blank material is coated with coating material until a predeterminable diameter is reached and wherein the refractive index of the coating material to be applied is successively varied along the radius of the resulting blank according to a predeterminable profile, **characterized in that** at least one film (3, 3a to 3n) of the coating material is wound onto the core (1), there being constant welding with the core material, until a predeterminable diameter is reached, the refractive index of the film (3, 3a to 3n) being varied with the length.

2. Process according to claim 1, **characterized in that** the film is welded on by means of a device arranged along the core (1), said device emitting a radiation which is absorbed, with generation of heat, by the wound-on film (3, 3a to 3n) and thereby leads to the softening and welding of the film (3, 3a to 3n).

3. Process according to any one of claims 1 or 2, **characterized in that**, in order to change the refractive index, a switch is made between films (3) of different refractive indices.

4. Process according to any one of the preceding claims, **characterized in that**, in order to achieve a variable refractive index, a plurality of films (3a to 3n) of different refractive indices are wound one over the other, the refractive index of at least one of the films being variable over its length.

5. Process according to any one of the preceding claims, **characterized in that** a plurality of films (3a to 3n) of different refractive indices are wound one over the other, the thickness ratio of the films (3a to 3n) with respect to each other being variable over their length in order to achieve a variable overall refractive index of the films (3a to 3n).

6. Process according to claim 5, **characterized in that** at least one film (3) is pulled out by changing its delivery rate in order to vary its thickness prior to being wound on.

7. Process according to any one of the preceding claims, **characterized in that** the refractive index of at least one film (3) is varied by irradiation (7) with electromagnetic radiation during winding on.

8. Process according to any one of the preceding claims, **characterized in that** the refractive index of at least one film (3) is varied by irradiation (6) with corpuscles during winding on.

9. Process according to any one of the preceding claims, **characterized in that** the refractive index of at least one film (3) is varied by mixing (7) with dopants during winding on.

10. Process according to any one of the preceding claims, **characterized in that** the refractive index of at least one film (3) is varied by coating with a material with a different refractive index.

11. Process according to any one of claims 9 or 10, **characterized in that** the substances which change the refractive index of the film (3) are sprayed on.

12. Process according to any one of the preceding claims, **characterized in that** the refractive index of at least one film is varied prior to winding on by dipping of the film into baths which change the refractive index.

13. Process according to claim 12, **characterized in that** the film (3) is dipped into baths (5) which effect the diffusion of the refractive-index-changing substances between film and bath liquid.

14. Process according to any one of the preceding claims, **characterized in that** winding on takes place in a vacuum (8, 9).

15. Process according to any one of claims 1 to 13, **characterized in that** winding on takes place in a helium atmosphere (8, 9).

16. Process according to any one of the preceding claims, **characterized in that** the core (1) has a thickness of the order of magnitude of 10 mm.

17. Process according to any one of the preceding claims, **characterized in that** the order of magnitude of the thickness of the film (3, 3a to 3n) to be wound on is in a range from 1 µm to 1000 µm.

18. Process according to any one of the preceding claims, **characterized in that** the core (1) is mechanically tensioned in order to prevent excessive bending during coating.

19. Process according to any one of the preceding claims, **characterized in that** the core (1) is vertically held in order to prevent bending during coating.

20. Process according to any one of the preceding claims, **characterized in that** both the core material and also the coating material are acrylic glass.

21. Process according to any one of the preceding claims, **characterized in that** both the core material and also the coating material are a PTFE-like plastic.

22. Process according to any one of the preceding claims, **characterized in that** the refractive index profile of the blank is smoothed by tempering.

## Revendications

1. Procédé de fabrication de préformes pour fibres optiques polymères avec indice de réfraction modifiable par le rayon, un noyau (1) dans le matériau de la préforme étant recouvert de couches jusqu'à obtention d'un diamètre définissable et l'indice de réfraction du matériau des couches étant modifié dans une progression donnée le long du rayon de la préforme en cours de formation, **caractérisé en ce qu'**au moins un ruban (3, 3a à 3n) du matériau des couches est enroulé sur le noyau avec soudure permanente avec le matériau du noyau (1) jusqu'à obtention d'un diamètre définissable, l'indice de réfraction du ruban (3, 3a à 3n) variant en fonction de la longueur.

2. Procédé selon la revendication 1, **caractérisé en ce que** le ruban est soudé à l'aide d'un dispositif placé le long du noyau (1), qui émet un rayonnement qui est absorbé par le ruban enroulé (3, 3a à 3n) avec formation de chaleur, qui ramollit et soude le ruban (3, 3a à 3n).

3. Procédé selon l'une des revendications 1 ou 2, **caractérisé en ce que** la modification de l'indice de réfraction est obtenue par alternance de rubans (3) de divers indices de réfraction.

4. Procédé selon l'une des revendications précédentes, **caractérisé en ce que**, pour obtenir un indice de réfraction modifiable, plusieurs rubans (3a à 3n) de divers indices de réfraction sont enroulées les uns sur les autres, l'indice de réfraction d'au moins un ruban étant modifiable par le biais de sa longueur.

5. Procédé selon l'une des revendications précédentes, **caractérisé en ce que** plusieurs rubans (3a à 3n) de divers indices de réfraction sont enroulés les uns sur les autres, le rapport entre les épaisseurs des rubans (3a à 3n) étant modifiable par le biais de leur longueur pour obtenir que l'indice de réfraction total des rubans (3a à 3n) soit modifiable.

6. Procédé selon la revendication 5, **caractérisé en ce que** l'épaisseur d'au moins un ruban (3) est modifiée avant son enroulement par ajustement de sa vitesse de présentation.

7. Procédé selon l'une des revendications précédentes, **caractérisé en ce que** l'indice de réfraction d'au moins un ruban (3) est modifié par rayonnement (7) électromagnétique pendant l'enroulement.

8. Procédé selon l'une des revendications précédentes, **caractérisé en ce que** l'indice de réfraction d'au moins un ruban (3) est modifié par rayonnement (6) de corpuscules pendant l'enroulement.

9. Procédé selon l'une des revendications précédentes, **caractérisé en ce que** l'indice de réfraction d'au moins un ruban (3) est modifié par adjonction (7) d'éléments dopants pendant l'enroulement.

10. Procédé selon l'une des revendications précédentes, **caractérisé en ce que** l'indice de réfraction d'au moins un ruban (3) est modifié par application d'une couche d'un matériau d'indice de réfraction différent.

11. Procédé selon l'une des revendications 9 ou 10, **caractérisé en ce que** les matériaux modifiant l'indice de réfraction du ruban (3) sont appliqués au vaporisateur.

12. Procédé selon l'une des revendications précédentes, **caractérisé en ce que** l'indice de réfraction d'au moins un ruban (3) est modifié avant l'enroulement par trempage du ruban dans des bains modifiant l'indice de réfraction.

13. Procédé selon la revendication 12, **caractérisé en ce que** le ruban (3) est trempé dans des bains (5) qui provoquent une diffusion, entre le ruban et le liquide du bain, des matériaux modifiant l'indice de réfraction.

14. Procédé selon l'une des revendications précédentes, **caractérisé en ce que** l'enroulement a lieu dans le vide (8, 9).

15. Procédé selon l'une des revendications 1 à 13, **caractérisé en ce que** l'enroulement a lieu dans une atmosphère d'hélium (8, 9) .

16. Procédé selon l'une des revendications précédentes, **caractérisé en ce que** le noyau (1) a une épaisseur de l'ordre de 10 mm.

17. Procédé selon l'une des revendications précédentes, **caractérisé en ce que** le ruban à enrouler (3, 3a à 3n) a une épaisseur de l'ordre de 1 ·m à 1000 ·m.

18. Procédé selon l'une des revendications précédentes, **caractérisé en ce que** le noyau (1) est soumis à une tension mécanique lors de l'application des couches afin d'éviter une flexion permanente excessive.

19. Procédé selon l'une des revendications précédentes, **caractérisé en ce que** le noyau (1) est disposé verticalement lors de l'application des couches afin d'éviter une flexion permanente.

20. Procédé selon l'une des revendications précédentes, **caractérisé en ce qu'**aussi bien le noyau que le revêtement sont en verre acrylique.

21. Procédé selon l'une des revendications précédentes, **caractérisé en ce qu'**aussi bien le noyau que le revêtement sont en matière plastique de type PTFE.

22. Procédé selon l'une des revendications précédentes, **caractérisé en ce que** le profil de l'indice de réfraction de la préforme est lissé par attrempage.
